# EUROPÄISCHE PATENTANMELDUNG

(11) **EP 1 009 151 A2**
(43) Veröffentlichungstag der Anmeldung: **14.06.2000**
(21) Anmeldenummer: 99114725.7
(22) Anmeldetag: 28.07.1999
(51) Int. Cl.: H04M 3/54

(54) **Verfahren zur Durchführung einer Rufweiterleitung sowie Rufweiterleitungseinrichtung**

(30) Priorität: 07.12.1998 DE 19856269
(71) Anmelder: ROBERT BOSCH GMBH, 70442 Stuttgart (DE)
(72) Erfinder: Steuer, Manfred, 65719 Hofheim (DE)

(57) **Zusammenfassung**

Zur Rufweiterleitung für einen von einer ersten Teilnehmerstelle (1) an eine zweite Teilnehmerstelle (2) gerichteten Anruf ist ein Rufweiterleitungsspeicher (3) vorgesehen. In Abhängigkeit einer im Rufweiterleitungsspeicher (3) abgelegten Zieladresse wird über einen Rufdienst die Rufnummer oder eine Rückrufnachricht zu einem Rufdienstteilnehmer (4) übertragen, der der zweiten Teilnehmerstelle (2) zugeordnet ist.

Mit den Maßnahmen der Erfindung fallen nicht automatisch zusätzliche Gebühren für eine Rufumleitung an.

## Beschreibung

### Stand der Technik

Die Erfindung geht aus von einem Verfahren zur Durchführung einer Rufweiterleitung. Die Rufweiterleitung für einen von einer ersten Teilnehmerstelle an eine zweite Teilnehmerstelle gerichteten Anruf im öffentlichen Netz ist bekannt und eingeführt im ISDN bzw. im analogen Ortsvermittlungsnetz mit GEDAN und auch in Nebenstellenanlagen mit mindestens zwei Amtsleitungen. Ein ankommender Anruf wird mittels vorprogrammierter Rufnummer zur umzuleitenden Stelle über einen freien B-Kanal bzw. Amtsleitung verbunden.

Aus der DE 43 43 335 C2 ist eine Rufumleitungseinrichtung bekannt, die eine Rufumleitung von einem Festnetz auf ein mobiles Netz ermöglicht.

### Vorteile der Erfindung

Mit den Maßnahmen der Erfindung fallen im Gegensatz zu den bekannten Lösungen nicht automatisch die Gesprächskosten an von der rufenden Teilnehmerstelle zur gerufenen Teilnehmerstelle und die zusätzlichen Gesprächskosten von der gerufenen Teilnehmerstelle zur Rufweiterungsstelle sowie im Falle von GEDAN zusätzliche Gebühren für die Bereitstellung des Dienstes. Bei der Erfindung kann die Rufweiterleitungsstelle bzw. der Rufdienstteilnehmer zu einem beliebigen Zeitpunkt zurückrufen. Der Rufdienstteilnehmer kann auch mehrere Weiterleitungsrufe speichern, wobei insbesondere im öffentlichen Netz nur die einfache Gebühr für die Verbindung gerufene Teilnehmerstelle zu rufender Teilnehmerstelle anfällt.

Es ist auch möglich, daß der Rufdienstteilnehmer bei der ihm zugeordneten zweiten Teilnehmerstelle die für ihn bestimmten Anrufe insbesondere per Codeeingabe abruft. Über einen Vergleich mit einer Rufnummernliste kann eine eingehende Rufnummer selektiert werden, d.h. es werden dann nur wichtige oder erwünschte Anrufe weitergeleitet.

Da bei ISDN-Teilnehmern die Rufnummer sowieso mitübertragen wird, ist kaum ein Mehraufwand notwendig. Es muß lediglich ein Rufweiterleitungsspeicher vorgesehen werden, der eingehende Anrufe mit einer Zieladresse verknüpft und an den Rufdienst weiterleitet. Bei analogen Teilnehmern kann die Rufnummer bei bestimmten Vermittlungssystemen ebenfalls übertragen werden, ober die Rufnummer wird per Sprachansage angefordert. Sie kann dann nach der Aufforderung vom rufenden Teilnehmer mittels MFV-Nachwahl zum gerufenen Teilnehmer übertragen werden, so daß auch hier eine Rufnummernübertragung und Speicherung möglich ist sowie eine Übertragung zum Rufdienstteilnehmer.

Es können zum Funkrufdienst auch zusätzliche Informationen mitübertragen werden wie Uhrzeit, Datum, Name und/oder sonstige Identifikationsmerkmale des rufenden Teilnehmers. Je nach der bei der zweiten Teilnehmerstelle eingehenden Rufnummer/Identifikation kann auch eine Rufweiterleitung an verschiedene Rufdienstteilnehmer erfolgen.

### Zeichnungen

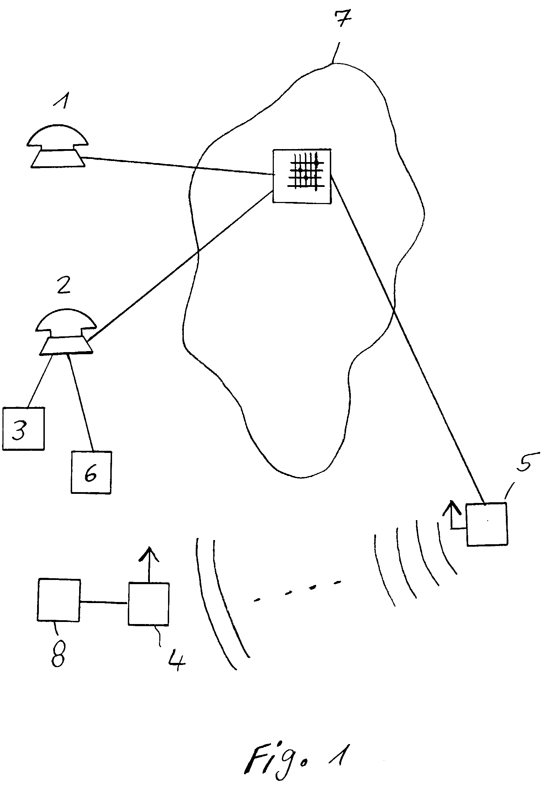

Anhand der Figur 1, die ein Übersichtsbild einer Rufweiterleitung nach der Erfindung zeigt, werden Ausführungsbeispiele der Erfindung erläutert.

### Beschreibung von Ausführungsbeispielen

Bei dem in Figur 1 dargestellten Ausführungsbeispiel soll eine Rufweiterleitung für einen von einer ersten Teilnehmerstelle 1 an eine zweite Teilnehmerstelle 2 gerichteten Anruf erfolgen. Die beiden Teilnehmerstellen 1 und 2 sollen zu einem gebührenpflichtigen Kommunikationsnetz, z.B. dem öffentlichen Fernsprechnetz 7, gehören. Der zweiten Teilnehmerstelle 2 ist hierzu ein Rufweiterleitungsspeicher 3 zugeordnet. Bei eingeleiteter Rufweiterleitung wird die Rufnummer der ersten Teilnehmerstelle 1 in dem Rufweiterleitungsspeicher 3 gespeichert und durch einen Rufdienst, z. B. einen Funkrufdienst wie Scall, Quix, usw., zu einem der zweiten Teilnehmerstelle 2 zugeordneten Rufdienstteilnehmer 4 übertragen. Die Übertragung der Rufnummer oder einer sonstigen Identifikation der ersten Teilnehmerstelle 1 ist bei ISDN-fähigen Endgeräten bzw. ISDN-fähigen Nebenstellenanlagen ein gängiges Leistungsmerkmal. Der Rufweiterleitungsspeicher 3 enthält als Zieladresse für die Rufweiterleitung die Wahlinformation, z. B. Scall-Dienst (gebührenpflichtig), und den Scall-Rufdienstteilnehmer 4. Bei der Wahlprozedur wird diesem Ziel die Nachricht der Rufnummer der rufenden (ersten) Teilnehmerstelle 1 übermittelt, d.h. in Abhängigkeit der im Rufweiterleitungsspeicher 3 abgelegten Zieladresse wird die Rufnummer bzw. Identifikation der rufenden Teilnehmerstelle 1 zum Rufdienstteilnehmer 4 übertragen. Zur Rufweiterleitung innerhalb des Rufdienstnetzes wird eine entsprechende Rufsendestation 5 eingeschaltet, die sich im Empfangsbereich des Rufdienstteilnehmers 4 befindet. Nach Erhalt der Nachricht in Form der Rufnummer, kann der Rufdienstteilnehmer 4 zu einem von ihm beliebig gewählten Zeitpunkt den Rückruf zur ruf enden Teilnehmerstelle 1 durchführen.

Anstelle der Weiterleitung der Rufnummer der rufenden Teilnehmerstelle 1 an den Rufdienstteilnehmer 4 kann auch aus der bei der zweiten Teilnehmerstelle 2 eingehenden Rufnummer eine Rückrufnachricht, z.B. als Code, generiert werden, die zum Rufdienstteilnehmer 4 übermittelt wird. Der Rufdienstteilnehmer 4 kann dann bei der eigenen Nebenstellenanlage, bzw. der zweiten Teilnehmerstelle 2, anrufen und mittels Codeeingabe alle eingegangen Anrufe abrufen. So kann er mit nur einer gebührenpflichtigen Verbindung alle Rückrufwünsche abrufen und dann selbst entscheiden, bei welcher ruf enden Teilnehmerstelle er überhaupt rückrufen möchte. Die Codeeingabe für den Abruf der eingegangenen Anrufe, d.h. die Aktivierung des Rufweiterleitungsspeichers 3 zur Anzeige oder Identifizierung eingegangener Anrufe, kann z.B. durch MFV-Zeichen, ähnlich einem Anrufbeantworter mit Fernabfrage, erfolgen.

Der Rufdienstteilnehmer 4 kann auch selbst mit einem Speicher 8 ausgerüstet sein zur Speicherung aller an ihn gerichteten Anrufe bzw. Rückrufnachrichten, so daß eine Rückfrage bei der zweiten Teilnehmerstelle 2 entbehrlich sein kann.

Zur Selektion der Anrufe, die weitergeleitet werden sollen, kann bei der zweiten Teilnehmerstelle 2 ein Speicher vorgesehen sein, eventuell als Bestandteil des Rufweiterleitungsspeichers 3, der eine Rufnummernliste enthält. Eingehende Anrufe werden mit dieser Rufnummernliste verglichen und nur dann weitergeleitet, bzw. ein Scall-Ruf abgesendet, wenn sie mit einer dort abgelegten Rufnummer übereinstimmen, oder nicht weitergeleitet, wenn die Rufnummern übereinstimmen.

Neben der Rufnummer oder Identifikation kann auch eine zusätzliche Information, wie z.B. Name, Datum, Uhrzeit mit übertragen/weitergeleitet werden. Der Name kann dann mitübertragen werden, wenn im Rufweiterleitungsspeicher 3 neben der Rufnummer auch der zugehörige Name gespeichert ist.

Bei einer analogen rufenden Teilnehmerstelle, die keine Rufnummernübertragung hat, oder einer analogen gerufenen Teilnehmerstelle, zu der die Rufnummer der rufenden Teilnehmerstelle nicht übertragen werden kann, wird die Rufnummer der rufenden Teilnehmerstelle nach Anforderungszeichen - Sprachansage oder Ton - angefordert und mittels Nachwahl (MFV) zur gerufenen Teilnehmerstelle übertragen. Für letzteren Fall fallen Gebühren für die rufende Teilnehmerstelle an. Die empfangenen Zeichen werden mittels eines Empfängers, z.B. eines MFV-Empfängers, erkannt und in den Rufweiterleitungsspeicher 3 eingetragen.

Zur Rufweiterleitung für analoge rufende Teilnehmerstellen 1 kann die gerufene Teilnehmerstelle 2 auch eine Spracherkennungseinrichtung 6 aufweisen. Der rufende Teilnehmer der Teilnehmerstelle 1 wird durch Sprachansage aufgefordert, seine Rufnummer oder Identifikation zu nennen. Die Rufnummer wird erkannt und in den Rufweiterleitungsspeicher 3 geschrieben. Aus Sicherheitsgründen kann die Rufnummer mittels Sprachansage wiederholt werden. Alternativ dazu kann auch jede einzelne erkannte Ziffer per Sprachansage wiederholt werden, z.B. im Rahmen der Bedienerführung als Shake-Hand-Verfahren, um die Fehlermöglichkeiten zu verringern.

Einer gerufenen Teilnehmerstelle 2 können auch mehr als ein Rufdienstteilnehmer zugeordnet sein. Je nach eingehender Rufnummer können verschiedene Zieladressen für Rufdienstteilnehmer über den Rufweiterleitungsspeicher 3 zugeordnet sein und so Rufnummern bzw. Identifikationen oder Rückrufnachrichten an unterschiedliche Rufdienstteilnehmer geleitet/weitergeleitet werden.

Der Rufdienstteilnehmer, z.B. Scall-Empfänger, kann mehrere Weiterleitungsrufe speichern und es fällt nur eine einfache Gebühr an für die Verbindung gerufene Teilnehmerstelle zu rufender Teilnehmerstelle bis auf die Scall-Ruf-Gebühr.

Die Übertragung der Rufnummern, die weitergeleitet werden sollen, können auch über Datendienste wie z.B. das Internet an eine oder mehrere vorbestimmte Adressen, d.h. zu einer oder mehreren Rufweiterleitungsstellen, gesendet werden.

## Patentansprüche

1. Verfahren zur Durchführung einer Rufweiterleitung für einen von einer ersten Teilnehmerstelle (1) an eine zweite Teilnehmerstelle (2) gerichteten Anruf mit folgenden Schritten:
- die Rufnummer oder eine entsprechende Identifikation der ersten Teilnehmerstelle (1) wird zur zweiten Teilnehmerstelle (2) übertragen und dort zu einem Rufweiterleitungsspeicher (3) geleitet,
- in Abhängigkeit einer im Rufweiterleitungsspeicher (3) abgelegten Zieladresse wird über einen Rufdienst oder Datendienst die Rufnummer bzw. die entsprechende Identifikation und/oder eine Rückrufnachricht zu einem der zweiten Teilnehmerstelle (2) zugeordneten Rufdienstteilnehmer (4) oder einer Rufweiterleitungsstelle geleitet/weitergeleitet.

2. Verfahren nach Anspruch 1, dadurch gekennzeichnet, daß der Rufdienstteilnehmer (4) nach Erhalt der Rufnummer/Identifikation oder Rückrufnachricht in Abhängigkeit davon, ob er die rufende Teilnehmerstelle (1) zurückrufen möchte, einen Rückruf zu dieser einleitet.

3. Verfahren nach Anspruch 1 oder 2, dadurch gekennzeichnet, daß eine zur zweiten Teilnehmerstelle (2) übertragene Rufnummer oder Identifikation im Rufweiterleitungsspeicher (3) abgespeichert wird.

4. Verfahrne nach einem der Ansprüche 1 bis 3, dadurch gekennzeichnet, daß aus einer zur zweiten Teilnehmerstelle (2) übertragenen Rufnummer oder Identifikation eine Rückrufnachricht für den zugeordneten Rufdienstteilnehmer (4) generiert wird.

5. Verfahren nach einem der Ansprüche 1 bis 4, dadurch gekennzeichnet, daß der Rufdienstteilnehmer (4) nach Erhalt einer oder mehrerer Rückrufnachrichten bei der zweiten Teilnehmerstelle (2) anruft und die dort eingegangenen Anrufe, insbesondere durch Aktivierung des Rufweiterleitungsspeichers (3) mittels Codeeingabe, abruft.

6. Verfahren nach einem der Ansprüche 1 bis 5, dadurch gekennzeichnet, daß der Rufdienstteilnehmer (4) die an ihn weitergeleiteten Rufnummern oder Identifikationen bzw. die Rückrufnachrichten speichert.

7. Verfahren nach einem der Ansprüche 1 bis 6, dadurch gekennzeichnet, daß je nach einer an die zweite Teilnehmerstelle (2) übertragenen Rufnummer oder Identifikation an verschiedene der zweiten Teilnehmerstelle (2) zugeordnete Rufdienstteilnehmer (4) Rufnummern bzw. Identifikationen und/oder Rückrufnachrichten geleitet/weitergeleitet werden.

8. Verfahren nach einem der Ansprüche 1 bis 7, dadurch gekennzeichnet, daß in den Rufweiterleitungsspeicher (3) als Zieladresse für eine Rufweiterleitung jeweils die Wahlinformation des Rufdienstes und der Rufdienstteilnehmer (4) eingetragen wird.

9. Verfahren nach einem der Ansprüche 1 bis 8, dadurch gekennzeichnet, daß eine zur zweiten Teilnehmerstelle (2) übertragene Rufnummer oder Identifikation mit einer Rufnummernliste, die bei der zweiten Teilnehmerstelle (2) in einem Speicher (3) abgelegt ist, verglichen wird und daß eine Weiterleitung dieser Rufnummer oder Identifikation bzw. die Generierung einer Rückrufnachricht nur dann erfolgt, wenn die entsprechende Rufnummer oder Identifikation in der Rufnummernliste enthalten ist.

10. Verfahren nach einem der Ansprüche 1 bis 9, dadurch gekennzeichnet, daß außer der Rufnummer oder Identifikation eine zusätzliche Information, wie z.B. Uhrzeit, Datum, Name mitübertragen/weitergeleitet wird.

11. Verfahren nach einem der Ansprüche 1 bis 10, dadurch gekennzeichnet, daß bei Teilnehmerstellen (1, 2) die nicht zur automatischen Rufnummernübertragung ausgerüstet sind, die Rufnummer der rufenden (ersten) Teilnehmerstelle (1) angefordert wird und insbesondere mittels Nachwahl zur gerufenen (zweiten) Teilnehmerstelle (2) übertragen wird.

12. Verfahren nach Anspruch 11, dadurch gekennzeichnet, daß die Anforderung der Rufnummer nach einem Anforderungszeichen, z.B. Sprachansage oder Ton, abgegeben wird.

13. Verfahren nach Anspruch 11 oder 12, dadurch gekennzeichnet, daß für den Fall, daß die zweite Teilnehmerstelle (2) eine Spracherkennungseinrichtung (6) aufweist, die Aufforderung zur Mitteilung der Rufnummer oder Identifikation per Sprache erfolgt und daß die von der Spracherkennungseinrichtung (6) erkannte Rufnummer oder Identifikation in den Rufweiterleitungsspeicher (3) eingetragen wird.

14. Verfahren nach Anspruch 13, dadurch gekennzeichnet, daß die Rufnummer oder Identifikation oder einzelne Teile davon, z.B. Ziffern, per Sprachansage wiederholt werden.

15. Rufweiterleitungseinrichtung zur Rufweiterleitung für einen von einer ersten Teilnehmerstelle (1) an eine zweite Teilnehmerstelle (2) gerichteten Anruf mit folgenden Merkmalen:
- einem Rufweiterleitungsspeicher (3) bei der zweiten Teilnehmerstelle (2) zur Verknüpfung einer gespeicherten Rufweiterleitungszieladresse mit der Rufnummer oder einer entsprechenden Identifikation der ersten Teilnehmerstelle (1),
- einer Rufdienstübertragungseinrichtung (5) zur Weiterleitung der Rufnummer mitsamt Zieladresse oder der Zieladresse mit einer Rückrufnachricht zu einem der zweiten Teilnehmerstelle (2) zugeordneten Rufdienst- oder Datendienstteilnehmer (4).

16. Verfahren nach einem der Ansprüche 1 bis 8, dadurch gekennzeichnet, daß eine zur zweiten Teilnehmerstelle (2) übertragene Rufnummer oder Identifikation mit einer Rufnummernliste, die bei der zweiten Teilnehmerstelle (2) in einem Speicher (3) abgelegt ist, verglichen wird und daß eine Weiterleitung dieser Rufnummer oder Identifikation bzw. Generierung einer Rückrufnachricht nicht erfolgt.

17. Verfahren nach einem der Ansprüche 1 bis 15, dadurch gekennzeichnet, daß die Rückrufnachricht mittels Datendienst, wie z.B. Internet, an eine Rufweiterleitungsstelle bzw. einen Rufdienstteilnehmer (4) übertragen wird.
